# EUROPEAN PATENT APPLICATION

(11) **EP 1 803 606 A1**
(43) Date of publication of application: **04.07.2007**
(21) Application number: 06077252.2
(22) Date of filing: 14.12.2006
(51) Int. Cl.: B60R 1/00, B60R 1/08

(54) **Mirror with rear seat viewing position**

(30) Priority: 30.12.2005 US 322521
(71) Applicant: Delphi Technologies, Inc., Troy, Michigan 48007 (US)
(72) Inventor: Griffin, Dennis P., Noblesville, IN 46060 (US); Fultz, William W., Carmel, IN 46033 (US)
(74) Representative: Denton, Michael John

(57) **Abstract**

A re-positionable mirror (10) in accordance with an exemplary embodiment is provided. The re-positionable mirror includes a control lever (14) and a reflective surface (12). The control lever is secured to the mirror and manipulates the reflective surface into one of a first position (16), a second position (18), and a third position (20). The reflective surface provides a view along a first line of sight (22) at the first position. The reflective surface provides another view along a second line of sight (24) at the second position, the second line of sight being angularly disposed above the first line of sight. The reflective surface provides another view along a third line of sight (26) at the third position, the third line of sight being angularly disposed below the first line of sight.

## Description

### TECHNICAL FIELD

The present invention relates to a re-positionable mirror for use in a vehicle. More particularly, the present invention relates to a mirror that is positionable between a first, a second, and a third position without having to manually re-adjust the same.

### BACKGROUND OF THE INVENTION

An operator of a vehicle typically uses a rear view mirror to view images of objects positioned generally in a direction toward a rear area of the vehicle. Conventional rear view mirrors provide the operator with an ability to position the rear view mirror between a day setting position and a night setting position. Typically, the operator manually moves the rear view mirror to a position corresponding to the day setting position for driving during hours of daylight. Thereafter, the operator may move a control member such as a lever coupled to the rear view mirror to position the rear view mirror at the night setting position for driving during hours of darkness. The night setting provides a view with reduced glare from light emanating from behind the operator's vehicle, such as light from other vehicle headlights. The manufacturer generally presets the amount of distance the rear view mirror moves when changed to the night setting position. Thereafter, the lever is generally used to switch the rear view mirror between day and night setting positions.

At the day setting position, the operator manually positions the rear view mirror for a line of sight that is substantially in a direction toward a rear window area of the vehicle for viewing images in the rear view mirror of objects positioned behind the operator's vehicle. The rear view mirror positioned at the night setting position provides the operator with a line of sight that is angled in a direction above the line of sight corresponding to the day setting position. The rear view mirror positioned at the night setting position generally faces in a direction toward a rear interior roof portion of the vehicle. The rear view mirror positioned at the night setting position provides the operator with substantially the same images as the day setting position. However, this position provides the operator with an indirect view of objects positioned behind the vehicle, because the line of sight for the night setting position does not directly face the objects behind the vehicle. Consequently, the operator is provided a view having reduced glare from light such as other vehicle headlights when the rear view mirror is at the night setting position.

The operator typically changes the position of the rear view mirror between the day and night setting positions by moving the lever. When the lever is used to change the position of the rear view mirror from the day setting to the night setting position, the day setting position the operator initially selected is maintained by the rear view mirror. When the lever is used to change the position of the rear view mirror from the night setting position to the day setting position, the rear view mirror has the same line of sight as when the operator initially selected a position for the day setting position. A disadvantage associated with this two-position configuration is that when the operator moves the rear view mirror to observe an interior area of the vehicle, the day setting position is no longer maintained and the operator must manually reposition the rear view mirror to the day setting position.

Accordingly, it is desirable to provide a re-positionable mirror with a control lever that allows an operator to quickly position the mirror to view a rear area inside a vehicle as well as provide a night setting, wherein a day setting is maintained.

### SUMMARY OF THE INVENTION

A re-positionable mirror for a vehicle in accordance with an exemplary embodiment is provided. The re-positionable mirror includes a control lever and a reflective surface. The control lever is secured to the mirror and for manipulating the reflective surface into one of a first position, a second position, and a third position. The reflective surface provides a view along a first line of sight at the first position. The reflective surface provides another view along a second line of sight at the second position, the second line of sight being angularly disposed above the first line of sight. The reflective surface provides another view along a third line of sight at the third position, the third line of sight being angularly disposed below the first line of sight.

A re-positionable mirror for use with a vehicle in accordance with an exemplary embodiment is provided. The re-positionable mirror includes a reflective surface and a control lever. The control lever is for manipulating the reflective surface into one of a first position, a second position, and a third position. The reflective surface provides a view along a first line of sight at the first position. The reflective surface provides another view along a second line of sight at the second position, the second line of sight being angularly disposed above the first line of sight. The reflective surface provides another view along a third line of sight at the third position, the third line of sight being angularly disposed below the first line of sight. A first position setting is maintained when using the control lever to move the reflective surface from the first position to the second or third positions.

A re-positionable mirror for use with a vehicle in accordance with an exemplary embodiment is provided. The re-positionable mirror includes a reflective surface, a holding member, and a control lever. The holding member includes first, second, and third receiving portions. The control lever is secured to the mirror and moves the reflective surface into one of first, second, and third positions. The control lever includes an engaging portion configured to engage one of the first, second, and third receiving portions to hold the reflective surface at one of the first, second, and third positions, respectively. The reflective surface provides a view along a first line of sight at the first position, and the reflective surface provides another view along a second line of sight at the second position, the second line of sight being angularly disposed above the first line of sight, and the reflective surface provides another view along a third line of sight at the third position, the third line of sight being angularly disposed below the first line of sight, wherein a first position setting is maintained when using the control lever to move the reflective surface from the first position to at least one of the second and third positions.

A method for positioning a reflective surface of a re-positionable mirror in accordance with an exemplary embodiment is provided. The re-positionable mirror includes a holding member with first, second, and third receiving portions, and a control lever for manipulating a position of the reflective surface. The control lever includes an engaging portion. The method includes moving the reflective surface to a first position, wherein the engaging portion engages the first receiving portion to hold the reflective surface at a first position. The method further includes moving the control lever to induce the engaging portion to engage the second receiving portion to hold the reflective surface at a second position. The method further includes moving the control lever to induce the engaging portion to engage the third receiving portion to hold the reflective surface at a third position.

### BRIEF DESCRIPTION OF THE DRAWINGS

Figure 1 is a front view of a re-positionable mirror in accordance with an exemplary embodiment of the present invention;
Figure 2 is a view along lines 2-2 of Figure 1;
Figure 3 is a side view of the re-positionable mirror of Figure 1 utilized for viewing a child disposed in a rear seating area of a vehicle in accordance with an exemplary embodiment;
Figure 4 is view of a control lever utilized on a steering wheel in accordance with another exemplary embodiment of a re-positionable mirror;
Figure 5 is a view of the control lever of Figure 4 taken along lines 5-5.
Figure 6 is an operation diagram for re-positioning a reflective surface in accordance with an exemplary embodiment;
Figure 7 is an operation diagram for re-positioning a reflective surface in accordance with another exemplary embodiment;
Figure 8 is a re-positionable mirror disposed in a first position in accordance with another exemplary embodiment;
Figure 9 is a view of re-positionable mirror of Figure 8 disposed in a second position; and
Figure 10 is a view of re-positionable mirror of Figure 8 disposed in a third position.

### DESCRIPTION OF THE PREFERRED EMBODIMENTS

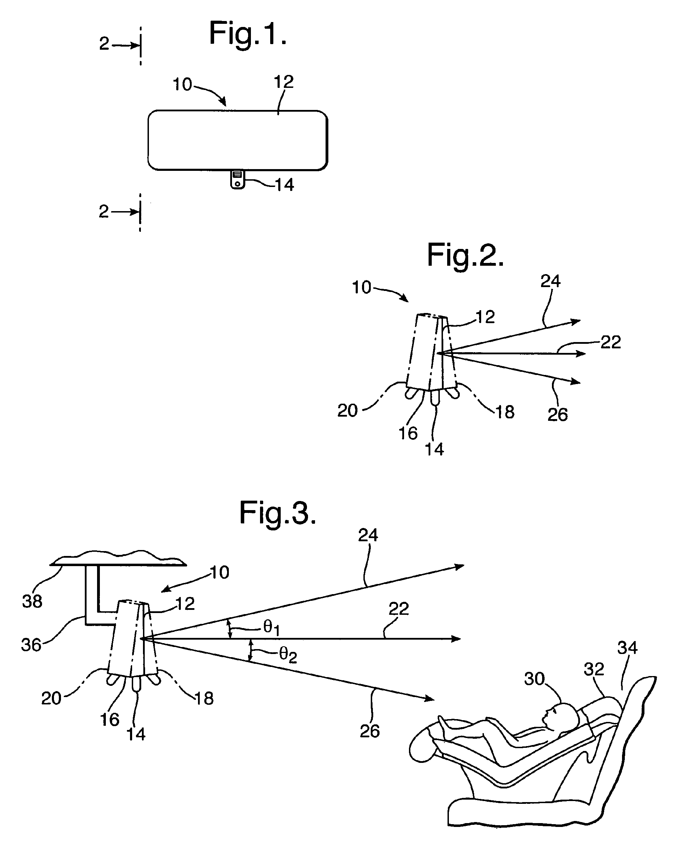

Referring now to Figures 1 and 2, a re-positionable mirror 10 constructed in accordance with an exemplary embodiment of the present invention is illustrated. Re-positionable mirror 10 provides a means for viewing images of objects along three lines of sight via manipulation of a control lever, wherein a first selected position setting is maintained. A force is applied to a lever to move re-positionable mirror 10 between two positions corresponding to two of the three lines of sight while re-positionable mirror 10 maintains a position setting corresponding to the third line of sight, which in an exemplary embodiment is the initial setting of the mirror, which is adjustable to the initial setting.

Re-positionable mirror 10 includes a reflective surface 12 and a control lever 14. A non-limiting example of reflective surface 12 is a plane mirror or other mirror that provides a substantially true image of an object relative to the mirror's position. Control lever 14 is provided to move reflective surface 12 between first, second, and third positions corresponding to first, second, and third lines of sight, respectively.

In an exemplary embodiment, control lever 14 is used to manipulate reflective surface 12 into one of a first position 16, a second position 18, and a third position 20 from any one of the other two positions. Reflective surface 12 provides a view along a first line of sight 22 when reflective surface 12 is disposed at first position 16. Reflective surface 12 also provides another view along a second line of sight 24 when reflective surface 12 is disposed at second position 18. When reflective surface 12 is disposed at second position 18, second line of sight 24 is angularly disposed above first line of sight 22. Reflective surface 12 also provides yet another view along a third line of sight 26 when reflective surface 12 is disposed at third position 20. When reflective surface 12 is disposed at third position 20, third line of sight 26 is angularly disposed below first line of sight 22.

Referring now to Figure 3, an exemplary embodiment of re-positionable mirror 10 disposed in a vehicle such as an automobile or truck is illustrated. When the reflective surface is in the first position, the first line of sight is substantially directed toward the vehicle's rear window area. First line of sight 22 is generally used for viewing objects substantially outside the rear window area, such as other vehicles positioned behind the vehicle. In an exemplary embodiment, reflective surface 12 is disposed at the first position that is considered a day setting position. In another exemplary embodiment, the day setting position is considered a default position.

First position 16 of reflective surface 12 is manually selected by moving the re-positionable mirror until a desired view is seen in the reflective surface. The desired view at the first position is generally based on factors such as an operator's physical characteristics, such as height, and the particular vehicle characteristics such as a configuration of the rear window area and its location relative to the operator's position. After manually positioning the reflective surface at the first position, control lever 14 is thereby used to move the reflective surface between the first, second, and third positions, where the first position is manually selected by the vehicle operator.

When the operator drives the vehicle during hours of night or darkness, lights originating from behind the vehicle may generate unwanted glare, if reflective surface 12 is positioned at first position 16 (e.g. the day setting position). An operator who wants to avoid the glare will position reflective surface 12 at second position 18. Second position 18 is thus a night setting position and control lever 14 is used to position reflective surface 12 at second position 18. When the reflective surface is at the second position, the reflective surface provides a second line of sight that is angularly disposed above the first line of sight, which is generally in a direction toward an interior roof area of the vehicle. When reflective surface 12 is positioned at second position 18, the night setting position, the view provided by reflective surface 12 has reduced brightness or dimmed light.

Occasionally, another position setting of reflective surface 12 is desired for viewing a rear seating area of the vehicle. For example, positioning reflective surface 12 at a child setting position for viewing a child or a pet disposed in the rear seating area. To use re-positionable mirror 10 for viewing the rear seating area and in accordance with an exemplary embodiment, control lever 14 is used to re-position reflective surface 12 to third position 20. In the third position, reflective surface 12 provides a third line of sight 26, which is angularly disposed below first line of sight 22. For example and referring now to Figure 3, reflective surface 12 is disposed at third position 20 for viewing a rear area of the vehicle. Wherein, a child 30 disposed in a child seat 32 in a rear seating area 34 of the vehicle is now viewable when reflective surface 12 is disposed at position 20. Of course, it is intended that reflective surface 12 disposed at third position 20 provides views that include other objects in the rear seating area.

In an exemplary embodiment, re-positionable mirror 10 is secured to the vehicle in a location that provides an operator of the vehicle with a desired view of exterior and interior areas of the vehicle. In an exemplary embodiment, the re-positionable mirror is secured to a mounting member 36. Mounting member 36 is secured to an interior headliner surface 38 of the vehicle. In an alternative embodiment, mounting member 36 is secured to a surface of the vehicle's windshield.

It is desirable to reposition reflective surface 12 from the day setting position to the third position without disrupting the day setting position. More particularly, re-positionable mirror 10 is configured maintain a previously set day setting position when reflective surface 12 is moved from the third position or the night setting position to the day setting position.

In an exemplary embodiment, re-positionable mirror 10 is configured so that second line of sight 24 is angularly disposed above first line of sight 22 at an angle θ₁. Third line of sight 26 is angularly disposed below first line of sight 22 at an angle θ₂. In an exemplary embodiment, θ₁ and θ₂ are defined by the range comprising greater than zero to ten degrees. It is, of course, intended that angles greater than ten degrees are considered to be within the scope of the present invention. The amount that second and third lines of sight are angularly displaced with respect to first line of sight 22 generally depends on the physical characteristics of the vehicle that re-positionable mirror 10 is disposed in. Of course, an alternative exemplary embodiment of positionable mirror 10 is configured to be angularly disposed at second and third positions 18, 20 that are suited for an operator's personal preferences as well as the operator's physical characteristics.

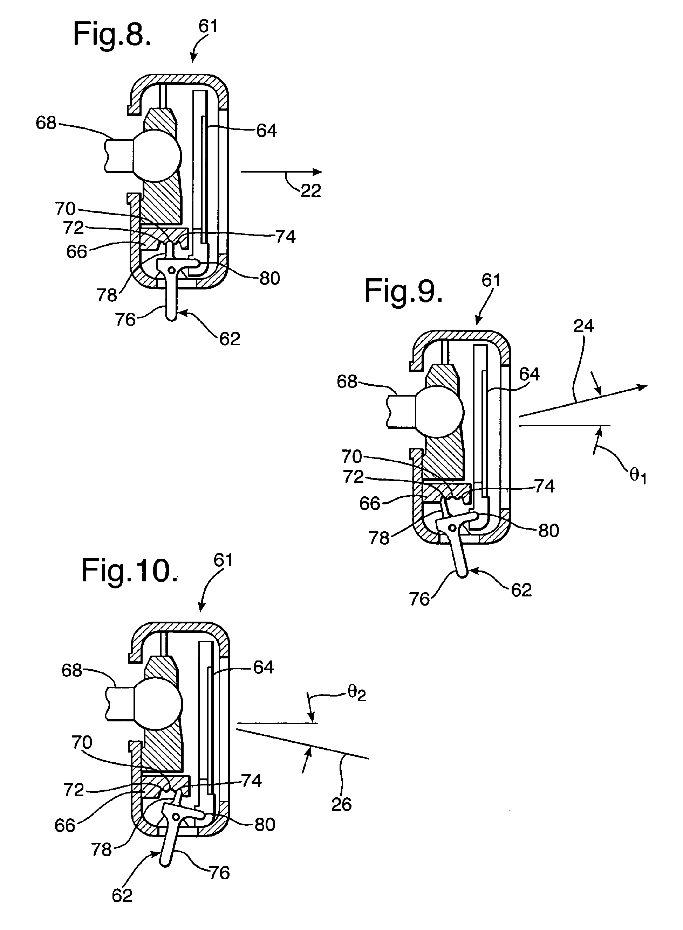

Referring now to Figures 8-10, a re-positionable mirror 61 is constructed in accordance with another exemplary embodiment of the present invention. Re-positionable mirror 61 includes a control lever 62, a reflective surface 64, and a holding member 66. Re-positionable mirror 61 is secured to a mounting member 68. Control lever 62 is used to move reflective surface 64 into one of a first position, a second position, and a third position from any one of the other two positions. The first, second, and third positions correspond to first line of sight 22, second line of sight 24, and third line of sight 26, respectively. First line of sight 22, second line of sight 24, and third line of sight 26 correspond to the day setting, the night setting, and the child setting positions, respectively.

Re-positionable mirror 61 is configured to be manually movable about a portion of mounting member 68. Re-positionable mirror 61 is also configured to remain substantially fixed about a portion of mounting member 68 at a manually set position until a force is applied to re-positionable mirror 61 to move the mirror to another position. For example, a vehicle operator can move re-positionable mirror 61 about mounting member 68 to the first position, where reflective surface 64 provides first line of sight 22. Re-positionable mirror 61 remains substantially fixed at the first position while the operator thereafter uses control lever 62 to move reflective surface 64 between the first, second, and third positions.

In an exemplary embodiment, holding member 66 includes at least one receiving portion configured to hold an engaging portion of control lever 62 at each of the first, second, and third positions until a force is applied to control lever 62 to move the engaging portion to one of the other two positions.
Control lever 62 is configured to move reflective surface 64 to any one of the first, second, and third positions and to hold reflective surface 64 at any one of the first, second, and third positions. In an exemplary embodiment, holding member 66 includes a first slot 70, a second slot 72, and a third slot 74, wherein each of the slots is configured to hold the engaging portion of control lever 62 therein until a force is applied to control lever 62 to move the engaging portion of control lever 62 into one of the other two slots.

In an exemplary embodiment, control lever 62 includes a finger tab 76, a first protrusion 78, and a second protrusion 80. First protrusion 78 is configured to be received into any one of first slot 70, second slot 72, and third slot 74. Second protrusion 80 is configured to move reflective surface 64 between the first position, the second position, and the third position when a force is applied to finger tab 76 to move first protrusion 78 into one of the three slots corresponding to one of the first, second, and third positions.

Referring to Figure 8, reflective surface 64 is held at the day setting position when first protrusion 78 is moved into first slot 70 until a force is applied to finger tab 76 to move first protrusion 78 from first slot 70. Referring to Figure 9, reflective surface 64 is moved from the day setting position to the night setting position when a force is applied to finger tab 76 to move first protrusion 78 from first slot 70 into second slot 72. Reflective surface 64 is held at the night setting position until a force is applied to finger tab 76 to move first protrusion 78 from second slot 72.

Referring to Figure 10, reflective surface 64 is moved from the day setting position to the child setting position when a force applied to finger tab 76 to move first protrusion 78 from first slot 70 to third slot 74. Reflective surface 64 is held at the child setting position until a force is applied to finger tab 76 to move first protrusion 78 from third slot 74. When reflective surface 64 is moved back to the day setting position, from the child or night setting positions by applying a force to finger tab 76 to move first protrusion 78 from slots 74 or 72 to slot 70, first line of sight 22 is the same as that manually set by the operator.

Reflective surface 64 may be moved between the child setting position and the night setting position by applying a force to finger tab 76 to move first protrusion 78 between third slot 74 and second slot 72. In this manner, reflective surface 64 is moved between and held at the day setting position, the night setting position, and the child setting position. In another exemplary embodiment, an actuating member is operably coupled to control lever 62 to provide the force to control lever 62 to move first protrusion 78 into slots 70, 72, 74, thereby moving reflective surface 64 between the first, second, and third positions. In another exemplary embodiment, a controller is used to provide first, second, and third commands to the actuating member to move the reflective surface 64 between the first, second, and third positions, respectively.

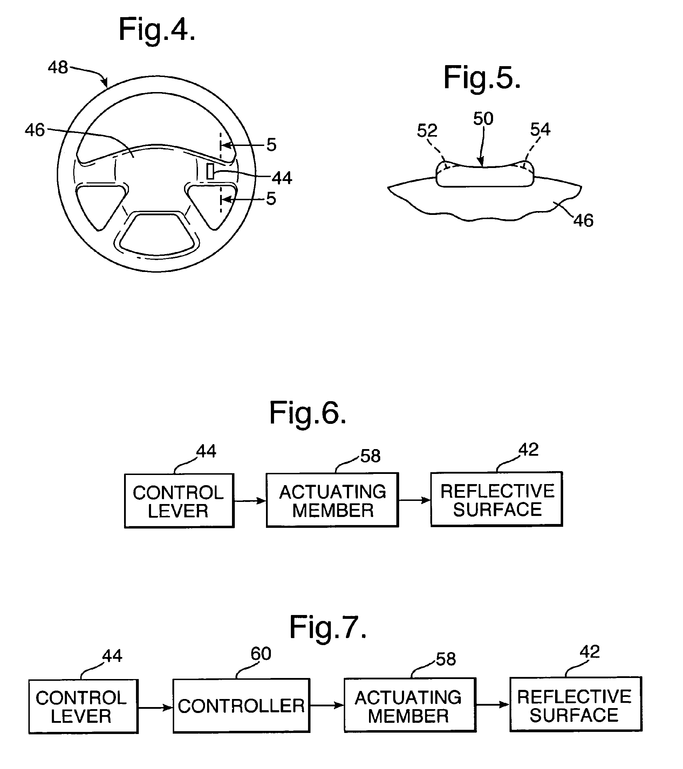

Referring now to Figures 4-6 and in an alternative exemplary embodiment, a re-positionable mirror has a reflective surface 42. A control lever 44 is remotely located with respect to reflective surface 42. In an exemplary embodiment, control lever 44 is disposed on a center portion 46 of a steering wheel 48 as illustrated in Figure 4. A signal is sent to an actuating member 58 corresponding to a position of control lever 44. Actuating member 58 is configured to provide a driving force when actuating member 58 receives the signal. The driving force urges reflective surface 42 to a different position.

In an exemplary embodiment, control lever 44 is a three-position switch having a first position 50, a second position 52, and a third position 54. For example, when control lever 44 is at first position 50, a first signal is sent to actuating member 58 corresponding to a day setting position of reflective surface 42. When control lever 44 is at second position 52, a second signal is sent to actuating member 58 corresponding to a night setting position of reflective surface 42. When control lever 44 is at third position 54, a third signal is sent to actuating member 58 corresponding to a child setting position of reflective surface 42. Actuating member 58 then urges reflective surface 42 to change to the position corresponding to the signal.

For example, when actuating member 58 receives the first signal, the actuating member 58 urges reflective surface 42 to the day setting position. If reflective surface 42 is at the night setting position when actuating member 58 receives the first signal, actuating member 58 then moves reflective surface 42 to the day setting position. If reflective surface 42 is at the child setting position when actuating member 58 receives the first signal, actuating member 58 then moves reflective surface 42 to the day setting position.

When actuating member 58 receives the second signal, the actuating member 58 urges reflective surface 42 to the night setting position. If reflective surface 42 is at the day setting position when actuating member 58 receives the second signal, actuating member 58 then moves reflective surface 42 to the night setting position. If reflective surface 42 is at the child setting position when actuating member 58 receives the second signal, actuating member 58 then moves reflective surface 42 to the night setting position.

When actuating member 58 receives the third signal, the actuating member 58 urges reflective surface 42 to the child setting position. If reflective surface 42 is at the day setting position when actuating member 58 receives the third signal, actuating member 58 then moves reflective surface 42 to the child setting position. If reflective surface 42 is at the night setting position when actuating member 58 receives the third signal, actuating member 58 then moves reflective surface 42 to the child setting position.

In an alternative exemplary embodiment, actuating member 58 is an electrical mechanism such as but not limited to a motor. For example, actuating member 58 is a stepper motor that is used for moving reflective surface 42 with precise angular displacements between the first, second, and third positions. In an alternative embodiment, a controller 60 such as but not limited to a computer that receives signals when control lever 44 is in the first, second, and third positions, as illustrated in Figure 7. Controller 60 then transmits a signal to actuating member 58 for changing a position of reflective surface 42.

In another alternative embodiment, when control lever 44 is at the first, second, and third positions, radio frequency (RF) signals are sent to controller 60 corresponding to the day, night, and child setting positions, respectively. Controller 60 then sends commands to actuating member 58 to move reflective surface 42 to a position corresponding to the day, night, and child setting positions. For example, a first RF signal sent to controller 60 corresponds to a day setting position of reflective surface 42. Controller 60 then sends a first command to actuating member 58 to move reflective surface 42 to the day setting position. A second RF signal sent to controller 60 corresponds to a night setting position of reflective surface 42. Controller 60 then sends a second command to actuating member 58 to move reflective surface 42 to the night setting position. A third RF signal sent to controller 60 corresponds to a child setting position of reflective surface 42. Controller 60 then sends a third command to actuating member 58 to move reflective surface 42 to the child setting position.

The location of control member 44 is not limited to the position on center portion 46 of steering wheel 48 as illustrated in Figure 4. Alternative exemplary embodiments include configurations where control lever 44 is disposed in the vehicle at a location accessible for the operator of the re-positionable mirror 40.
While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the present application.

## Claims

1. A re-positionable mirror (10) for a vehicle, comprising:
a reflective surface (12); and
a control lever (14) secured to the mirror and for manipulating the reflective surface into one of a first position (16), a second position (18), and a third position (20);
wherein the reflective surface provides a view along a first line of sight (22) at the first position, and the reflective surface provides another view along a second line of sight (24) at the second position, the second line of sight being angularly disposed above the first line of sight, and the reflective surface provides another view along a third line of sight (26) at the third position, the third line of sight being angularly disposed below the first line of sight.

2. The re-positionable mirror of claim 1, wherein the second line of sight is angularly disposed above the first line of sight within a range of greater than zero degrees to 10 degrees, wherein the first line of sight is a default position and the first line of sight is selected by manually adjusting a position of the re-positionable mirror.

3. The re-positionable mirror of claim 1, wherein the second line of sight is angularly disposed above the first line of sight by about 5 degrees, wherein the first line of sight is a default position and the first line of sight is selected by manually adjusting a position of the re-positionable mirror.

4. The re-positionable mirror of claim 1, wherein the third line of sight is angularly disposed below the first line of sight within a range of greater than zero degrees to 10 degrees, wherein the first line of sight is a default position and the first line of sight is selected by manually adjusting a position of the re-positionable mirror.

5. The re-positionable mirror of claim 4, wherein the second line of sight is angularly disposed above the first line of sight within a range of greater than zero degrees to 10 degrees.

6. The re-positionable mirror of claim 5, further comprising an actuating member coupled to the control lever, the actuating member being configured to move the reflective surface between the first, second, and third positions.

7. The re-positionable mirror of claim 6, wherein the actuating member is a motor.

8. The re-positionable mirror of claim 1, further comprising an actuating member coupled to the control lever, the actuating member being configured to move the reflective surface between the first, second, and third positions.

9. The re-positionable mirror of claim 1, wherein the third line of sight is angularly disposed below the first line of sight by about 5 degrees.

10. The re-positionable mirror of claim 1, further comprising a controller configured to generate first, second, and third commands to induce an actuating member to move the reflective surface to the first, second, and third positions, respectively.

11. The re-positionable mirror of claim 10, wherein the actuating member is a motor.

12. The re-positionable mirror of claim 1, further comprising a controller configured to generate first, second, and third commands to induce an actuating member to move the reflective surface to the first, second, and third positions, respectively, wherein the third line of sight is angularly disposed below the first line of sight within a range of greater than zero degrees to 10 degrees, wherein the first line of sight is a default position and the first line of sight is selected by manually adjusting a position of the re-positionable mirror, wherein the second line of sight is angularly disposed above the first line of sight within a range of greater than zero degrees to 10 degrees, wherein the actuating member is a motor.

13. A re-positionable mirror for use with a vehicle, comprising:
a reflective surface (42); and
a control lever (44) for manipulating the reflective surface (12) into one of a first position (16), a second position (18), and a third position (20);
wherein the reflective surface provides a view along a first line of sight at the first position, and the reflective surface provides another view along a second line of sight at the second position, the second line of sight being angularly disposed above the first line of sight, and the reflective surface provides another view along a third line of sight at the third position, the third line of sight being angularly disposed below the first line of sight, wherein a first position setting is maintained when using the control lever to move the reflective surface from the first position to the second or third positions.

14. The re-positionable mirror of claim 13, wherein the second line of sight is angularly disposed above the first line of sight within a range of greater than zero degrees to 10 degrees, wherein the first line of sight is a default position and the first line of sight is selected by manually adjusting a position of the re-positionable mirror.

15. The re-positionable mirror of claim 13, wherein the second line of sight is angularly disposed above the first line of sight by about 5 degrees, wherein the first line of sight is a default position and the first line of sight is selected by manually adjusting a position of the re-positionable mirror.

16. The re-positionable mirror of claim 13, wherein the third line of sight is angularly disposed below the first line of sight within a range of greater than zero degrees to 10 degrees, wherein the first line of sight is a default position and the first line of sight is selected by manually adjusting a position of the re-positionable mirror.

17. The re-positionable mirror of claim 16, wherein the second line of sight is angularly disposed above the first line of sight within a range of greater than zero degrees to 10 degrees.

18. The re-positionable mirror of claim 17, further comprising a controller (60) configured to generate first, second, and third commands to induce an actuating member (58) to move the reflective surface to the first, second, and third position, respectively.

19. The re-positionable mirror of claim 18, wherein the actuating member is a motor.

20. The re-positionable mirror of claim 13, further comprising a controller configured to generate first, second, and third commands to induce an actuating member to move the reflective surface to the first, second, and third positions, respectively.

21. The re-positionable mirror of claim 20, wherein the third line of sight is angularly disposed below the first line of sight by about 5 degrees.

22. The re-positionable mirror of claim 13, further comprising a controller configured for providing commands to an actuating member for moving the reflective surface between the first, second, and third positions, wherein the controller sends a first command corresponding to the first position, a second command corresponding to the second position, and a third command corresponding to the third position, wherein the third line of sight is angularly disposed below the first line of sight within a range of greater than zero degrees to 10 degrees, wherein the first line of sight is a default position and the first line of sight is selected by manually adjusting the re-positionable mirror, wherein the second line of sight is angularly disposed above the first line of sight within a range of greater than zero degrees to 10 degrees, wherein the actuating member is a motor.

23. A re-positionable mirror (61) for use with a vehicle, comprising:
a reflective surface (64);
a holding member (66) having first (70), second (72), and third (74) receiving portions; and
a control lever (62) secured to the mirror and for moving the reflective surface into one of first, second, and third positions, the control lever having an engaging portion (78) configured to engage one of the first, second, and third receiving portions to hold the reflective surface at one of the first, second, and third positions, respectively;
wherein the reflective surface provides a view along a first line of sight at the first position, and the reflective surface provides another view along a second line of sight at the second position, the second line of sight being angularly disposed above the first line of sight, and the reflective surface provides another view along a third line of sight at the third position, the third line of sight being angularly disposed below the first line of sight, wherein a first position setting is maintained when using the control lever to move the reflective surface from the first position to at least one of the second and third positions.

24. The re-positionable mirror of claim 23, wherein the second line of sight is angularly disposed above the first line of sight within a range of greater than zero degrees to 10 degrees and the third line of sight is angularly disposed below the first line of sight within a range of greater than zero degrees to 10 degrees, wherein the first line of sight is a default position and the first line of sight is selected by manually adjusting a position of the re-positionable mirror.

25. The re-positionable mirror of claim 24, further comprising an actuating member coupled to the control lever, the actuating member being configured to move the reflective surface between the first, second, and third positions.

26. The re-positionable mirror of claim 24, further comprising a controller configured to generate first, second, and third commands to induce an actuating member to move the reflective surface to the first, second, and third positions, respectively, and the actuating member is a motor.

27. A method for positioning a reflective surface of a re-positionable mirror, the re-positionable having a holding member with first, second, and third receiving portions, and a control lever for manipulating a position of the reflective surface, the control lever having an engaging portion, the method comprising:
moving the reflective surface to a first position, the engaging portion engaging the first receiving portion to hold the reflective surface at a first position;
moving the control lever to induce the engaging portion to engage the second receiving portion to hold the reflective surface at a second position; and
moving the control lever to induce the engaging portion to engage the third receiving portion to hold the reflective surface at a third position.
